# EUROPÄISCHE PATENTANMELDUNG

(11) **EP 1 096 346 A2**
(43) Veröffentlichungstag der Anmeldung: **02.05.2001**
(21) Anmeldenummer: 00123354.3
(22) Anmeldetag: 27.10.2000
(51) Int. Cl.: G05B 19/409

(54) **Anordnung zur Überwachung und Beeinflussung von rechnergesteuerten Produktionsanlagen**

(30) Priorität: 29.10.1999 DE 29919087 U
(71) Anmelder: CITRON Gesellschaft für CAD + Industrieelektronik mbH, 86165 Augsburg (DE)
(72) Erfinder: Kölbl Georg Dipl.-Ing. (FH), 86316 Friedberg (DE); Thanner Thomas Dipl.-Ing. (Univ.), 86399 Bobingen (DE)
(74) Vertreter: Borchert, Uwe Rudolf, Dipl.-Ing.

(57) **Zusammenfassung**

Die Erfindung betrifft eine Anordnung zur Überwachung und Beeinflussung von rechnergesteuerten Anlagen, insbesondere von Produktionsanlagen mit mehreren als Terminals (AT1 bis (AT4) ausgebildeten Überwachungsstationen mit jeweils einer Eingabe- und Anzeigevorrichtung (10, 11) zwecks Bedienung und Visualisierung der zu überwachenden Vorgänge, die zwecks bidirektionalem Datentransfer über eine autonome Schnittstelle, bestehend aus einem Host-Block (CLH) im Zentralrechner (ZR) der Anlage und einem Schaltblock (CLR) im Terminal, mit dem Zentralrechner verbunden sind, welche einen Prozessor (FB 11, FB 12) umfaßt zwecks rechnertaktunabhängiger Steuerung (Priorisierung) der Datenübertragung zwischen den Terminals (AT 1 bis AT4) und dem Zentralrechner (ZR).

## Beschreibung

Die Erfindung betrifft eine Anordnung zur Überwachung und Beeinflussung von rechnergesteuerten Anlagen, insbesondere von Produktionsanlagen.

Solche Produktionsanlagen in Form von Fertigungsstraßen für den Sondermaschinenbau und ähnlichem umfassen Anlage großer räumlicher Ausdehnung.

Es ist bekannt, diese Operator Panels als PC-basierende Bedien- und Beobachtungssysteme auszubilden, die mit den in aller Regel in einem klimatisierten Schaltschrank untergebrachten zentralen Rechner der Anlage vernetzt sind.

Eine solche Ausbildung erfordert relativ hohe Hardwarekosten für die zusätzlichen Panel PC's und erhöhten Platzbedarf für die mechanische Integration. Ein weiterer Nachteil ist darin zu sehen, dass Vernetzungs-Software erforderlich ist, welche den Datenaustausch zwischen den einzelnen Panel PC's koordiniert.

Gute Prozessvisualisierungs-Softwarepakete stellen zwar diese Funktionalität standardmäßig zur Verfügung, sind jedoch aufgrund der hohen Anfangsinvestition, der erforderlichen Einarbeitungszeit in die Systemeigenheiten sowie der Systemwartung keine ökonomische Lösung für kleinere Vernetzungsaufgaben.

Schließlich sind auch die für jeden zusätzlichen Panel PC anfallenden Lizenzgebühren für die notwendigen Betriebssysteme zu berücksichtigen.

Ausgehend von den Erfahrungen aus dem Umfeld des Sondermaschinenbaus, wonach die Mehrzahl der Anwender solcher Anlagen mit zwei abgesetzten Bedienstationen auskommen und relativ selten eine Forderung nach mehr als vier solcher Einheiten besteht, sowie der Verfügbarkeit der sogenannten Giga-Link Technologie, mit der eine mit einer maximalen Datenrate von 1,5 Gigabit arbeitende bidirektionale serielle Übertragungstechnik bezeichnet ist, liegt der Erfindung die Aufgabe zugrunde, eine Anordnung zur Überwachung und Beeinflussung von rechnergesteuerten Anlagen zu schaffen, die ohne die kostenaufwendige Verwendung von sogenannten Panel PC's und. damit ohne zusätzliche Betriebssysteme für diese PC's auskommt, sowie keine der für Betriebssysteme erforderlichen rotierenden und wartungsintensiven oder sonstige nichtflüchtige Speichermedien benötigt; trotzdem soll ein quasi-simultaner Betrieb möglich sein.

Diese Aufgabe ist erfindungsgemäß durch die technischen Merkmale des Patentanspruchs 1 gelöst.

Weitere Merkmale der Erfindung ergeben sich aus den Unteransprüchen.

Jede der als Terminal ausgebildeten Überwachungsstationen für die zu überwachende Anlage umfaßt also eine Bedienung und Visualisierung ermöglichende Eingabe- und Anzeigevorrichtung, die zwecks bidirektionellem Datentransfer über eine autonome Schnittstelle zwischen Zentralrechner und Überwachungsstationen untereinander und mit dem Rechner verbunden sind, wobei der Schnittstelle für die rechnertaktunabhängige Steuerung (Priorisierung) der Datenübertragung zwischen Terminal und Zentralrechner ein Prozessor zugeordnet ist.

Die Terminals können bis zu 400 m vom Rechner entfernt angeordnet werden und sind mit der Schnittstelle je nach Entfernung über Triaxialkabel oder über Lichtleiter sternförmig verbunden.

Vorteilhafter Weise umfaßt jedes Terminal Sende- und Empfangsbaugruppen zwecks Umwandlung der anfallenden Datenströme in serielle hochfrequente Signale und deren Dekodierung, wobei die Übertragung zwischen den Terminals und dem Rechner mittels des in der Schnittstelle vorhandenen Prozessors prioritätsabhängig (first come-first serve) gesteuert ist.

Die Bedienbarkeit der Anlage wird weiterhin erleichtert durch ein für die Aktivierung eines Terminals vorgesehenen Schlüsselschalters, der als eine anzuschlagende Taste, als Bedienung eines Touch-Eingabemediums oder als Handhabung einer Maus ausgebildet ist, wobei über ein Zeitglied in der Schnittstelle die Freigabe der für eine Datenübertragung gesperrte Terminals frühestens nach einem definierten Zeitintervall, z.B. nach 3 Sekunden nach der letzten Dateneingabe des aktivierten Terminals erfolgt.

Vorteilhaft ist ferner die jedem Terminal zugeordnete optische Anzeigevorrichtung zur Anzeige des augenblicklichen Betriebszustandes des Terminals. Über die dem Host-Block zugeordnete Anzeigevorrichtung kann der Status aller Terminals seriell angezeigt werden.

Das lokale Terminal ist vorzugsweise in der unmittelbaren Nähe des Zentralrechners, z.B. im Schaltschrank angeordnet, wobei die Verbindung des Terminals mit dem Host-Block in üblicher Weise erfolgt. Dem Anwender stehen also fünf adäquate Bedienplätze zur Verfügung.

Wie sich aus dem Vorstehenden ergibt, wird durch die erfindungsgemäße Anordnung erstmals ein betriebssystemunabhängiger priorisierter quasi-simultaner Betrieb von vier Operator Panels kostensparend ermöglicht, wobei über die bidirektionalen Verbindungen zwischen den einzelnen Operator Panels und dem Rechner ein *paralleler* Datenstrom in serielle hochfrequente Signale umgewandelt, übermittelt und nach dem Empfang wiederum dekodiert und den Schnittstellen für Tastur, Maus, Touch und der Videoanzeigevorrichtung zur Verfügung gestellt wird. Hierbei haben sich für die Anbindung der einzelnen Operator Panels für eine maximale Distanz von 50 m Triaxialkabel und für eine maximale Distanz von 400 m Lichtwellenleiter als vorteilhaft erwiesen. Die einzelnen Baugruppen können als Einsteckkarten oder Module ausgebildet werden, was zu superflachen Operator Panels führt und die ein Höchstmaß an Flexibilität bei ihrer Plazierung ergeben.

Durch die Auswahl und Anordnung der Komponenten ist der Host-Block kosten- und größenoptimiert ausführbar und kann als eine beidseitig SMD-bestückte Leiterplatte ausgebildet werden, welche zwecks Wärmeableitung in einem Metallgehäuse mit den maximalen Abmessungen von L160mm x B130mm x T25mm integriert ist und den Anschluß von bis zu vier abgesetzten Terminals über die genannten Lichtwellenleiter bzw. Triaxialkabel und eines lokalen Terminals ermöglicht.

Die Erfindung ist nachfolgend anhand eines in der Zeichnung mehr oder minder schematisch dargestellten Ausführungsbeispieles beschrieben.

Im Einzelnen zeigen:
- Fig. 1: das Systemschaltbild der Anordnung zur Überwachung und Beeinflussung von rechnergesteuerten Produktionsanlagen gemäß der Erfindung,
- Fig. 2: ein Blockschaltbild der autonomen Schnittstelle mit auf den zentralen Rechner und die Terminals der Produktionsanlage einwirkenden Baugruppen und
- Fig. 3: ein Blockschaltbild des einem jeden Terminal zugeordneten Datenverarbeitungsblocks.

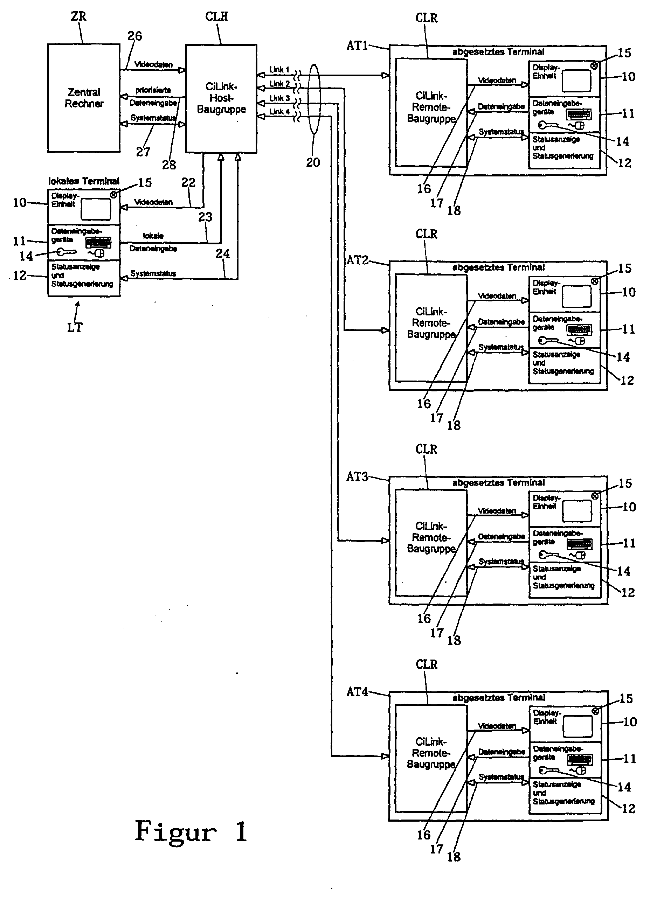

Einer in ihrem Aufbau und in ihren einzelnen Arbeitsmaschinen nicht dargestellten Produktionsanlage sind zwecks Steuerung der ebenfalls nicht dargestellten Arbeitsstationen ein Zentralrechner ZR sowie im Ausführungsbeispiel vier abgesetzte Terminals AT1 bis AT4 zugeordnet, die jeweils ein Display 10, eine Dateneingabe 11, eine der Statusanzeige und -generierung dienenden Baueinheit 12 sowie einen der Datenverarbeitung dienenden Block CLR umfassen; vgl. Fig. 1.

Der Dateneingabe 11 ist ein Schlüsselschalter 14 zugeordnet. Frner besitzt jedes Display ein der Funktionsanzeige des Terminals dienendes Anzeigeelement 15.

Die vorstehend genannten Baueinheiten sind mit dem Schaltblock CLR in Wirkverbindung, was durch Leitungselemente 16, 17 und 18 dargestellt ist. Über das Leitungselement 16 werden Videodaten, über das Leitungselement 17 Daten und über das Leitungselement 18 werden Statussignale zu bzw. abgeleitet, wie dies durch die Pfeile symbolisiert ist.

Über einen Leitungsbus 20, der entweder triaxiale Kupferübertragungsleitungen oder Glasfasern umfaßt, sind die abgesetzten Terminals AT1 bis AT4 mit der Baugruppe CLH der autonomen Schnittstelle verbunden, wobei mit Link 1 die bidirektionale Leitungsverbindung des Terminals AT1, mit Link 2 die bidirektionale Leitungsverbindung des Terminals AT2, mit Link 3 die bidirektionale Leitungsverbindung des Terminals AT3 und mit Link 4 die bidirektionale Leitungsverbindung des Terminals AT4 bezeichnet sind.

Die Baugruppe CLH wiederum weist Leitungselemente 26, 27 und 28 auf, über die die entsprechenden Verbindungen für die Übermittlung der Videodaten, der priorisierten Dateneingabe und des Systemstatus zum zentralen Rechner ZR erfolgt.

Schließlich ist ein dem zentralen Rechner zugeordnetes lokales Terminal LT zugeordnet, das entsprechend den abgesetzten Terminals AT1 bis AT4 ein Display 10, eine Dateneingabe 11 und eine Statusanzeige und -generierung umfaßt und über Leitungen 22 bis 24 mit dem Hast-Block CLH verbunden ist.

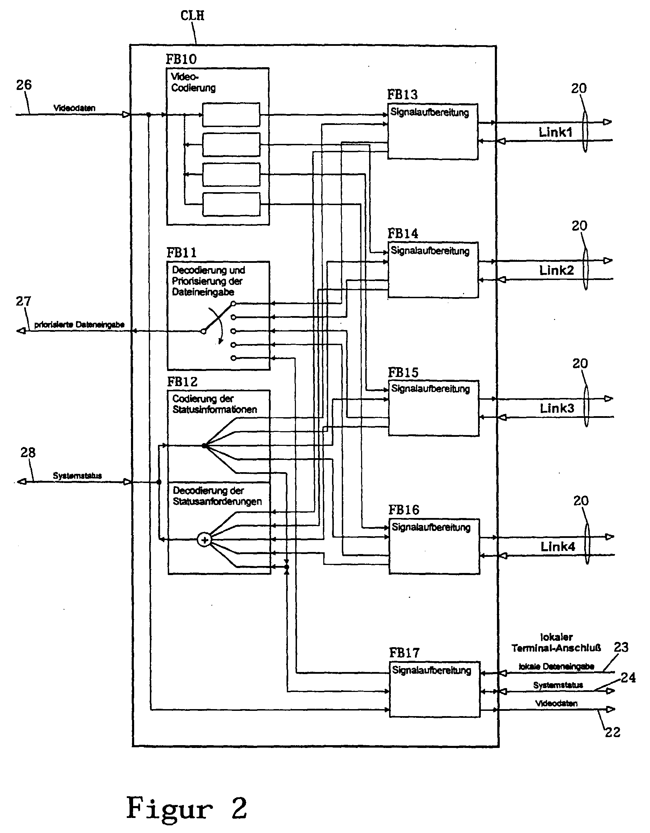

Wie die Fig. 2 zeigt, gehören zur Baugruppe CLH die Funktionsblöcke FB10 bis FB17, von denen der Funktionsblock FB10 der Videocodierung und die Funktionsblöcke FB13 bis FB17 der Signalaufbereitung zugeordnet sind. Die Funktionsblöcke FB11 und FB12 bilden den eigentlichen Mikroprozessor, dem die Decodierung und Priorisierung der Dateneingabe, die Decodierung der Statusinformationen und die Decodierung der Statusanforderungen obliegt.

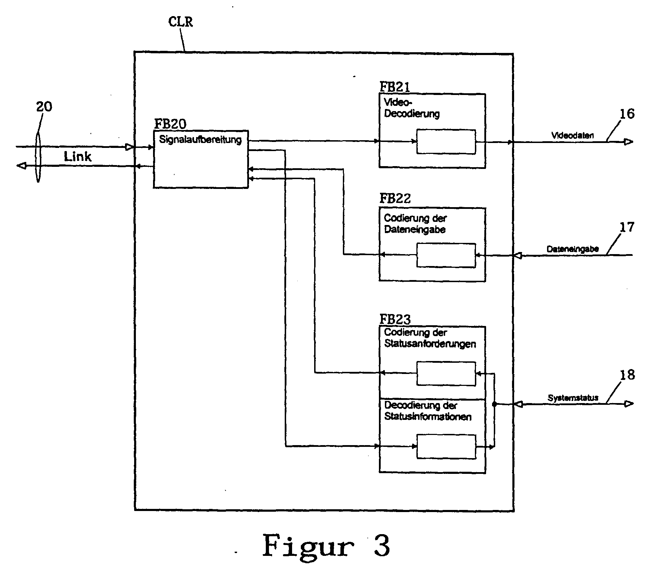

Über die Leitungselemente 26 bis 28 erfolgt die Verbindung zum zentralen Rechner ZR sowie zum lokalen Terminal LT, sowie über den Leitungsbus 20 die Verbindung zu den abgesetzten Terminals AT1 bis AT4. In Fig. 3 ist einer der den abgesetzten Terminals AT zugeordneten Schaltblöcke CLR dargestellt, der die Funktionsblöcke FB20 bis FB23 umfaßt, von denen der Funktionsblock FB20 der Signalaufbereitung, der Funkionsblock FB21 der Videodecodierung, der Funktionsblock FB22 der Codierung der Dateneingabe und der Funktionsblock FB23 der Decodierung der Statusinformationen und der Codierung der Statusanforderungen dient. Auch diese Baugruppe ist über Leitungen 16, 17, 18 mit dem Display 10 der Dateneingabe 11 und der Statusanzeige und -generierung sowie über den Datenbus 20 mit der Baugruppe CLH verbunden.

Die Funktionsweise der vorstehend beschriebenen Anordnung ist folgende:

Über den Zentralrechner ZB werden digitale Videodaten zur Visualisierung - es können auch analoge Videodaten sein, wenn entsprechende Analog/Digital-Wandler auf dem Host-Block CLH vorgesehen werden -, an den Host-Block geliefert, die priorisierte Dateneingabe ausgewertet und Informationen über den Systemstatus bidirektional ausgetauscht. Hierzu empfängt der Zentralrechner den Systemstatus aller abgesetzten Terminals AT1 bis AT4 und des lokalen Terminals LT über die Leitungsverbindungen seriell, um entsprechende Aktionen einzuleiten oder anzuzeigen, z.B. die optische Anzeige am Zentralrechner, welches Terminal gerade mittels des Schlüsselschalter 14 aktiviert wurde. Der Zentralrechner ZR kann seinen eigenen Systemstatus seriell an den Host-Block senden, welcher diese auf alle aktiven Terminals AT1 bis AT4 entsprechend aufgeprägter Steuersignale verteilt und dort entsprechend zur Anzeige bringt. Ein typisches Beispiel ist die optische Anzeige am Zentralrechner, sobald ein Zugriff auf dessen Festplatte erfolgt. Dieser Systemstatus kann auch auf allen Terminal angezeigt werden. Hier ist es möglich, dass über den Zentralrechner die einzelnen Terminals gezielt manipuliert werden können, d.h. es können Prioritäten geändert, einzelne Terminals gesperrt u. ähnliches veranlaßt werden.

Über den Host-Block CLH erfolgt die Verteilung der Videodaten auf alle Terminals. Mittels der Funktionsblöcke FB11 und FB12, die als Microprozessor ausgebildet sind, erfolgt die Dekodierung und Priorisierung und Steuerung der externen Dateneingaben, dort wird der Systemstatus aller Terminals und des Zentralrechners verwaltet und werden die vorliegenden Daten in eine bidirektionale serielle Information umgewandelt, die über die Links 1-4 weitergeleitet werden, wobei als Übertragungsmedium bis maximal 50 m triaxiale Kupferübertragungsleitungen und bis maximal 400m Lichtwellenleiter verwendet werden, die jeweils bidirektional ausgeführt sind.

Über jeden Schalt-Block CLR werden die Videodaten für das Display 10 des jeweils angeschlossenen Laufbereitet und werden Schnittstellen für die Dateneingabe 11 bereitsstellt. Die daraus resultierenden Datenströme werden codiert. Ferner wird der von dem Host-Block generierte Systemstatus decodiert und angezeigt oder es werden eigene Statusanforderungen codiert und an den Host-Block gemeldet. Die über die bidirektionale Leitungsverbindung mögliche Quittierung der Statusanforderungen erfolgt durch Decodierung der Systemstatus-Information, die von dem Host-Block erzeugt wird.

Die vorstehend im Zusammenhang mit einer Produktionsanlage beschriebene Anordnung kann auch in Verbindung mit Anlagen zur Zutrittskontrolle, zur Großlagerverwaltung und ähnlichem zu deren Überwachung und Beeinflussung gleich gut eingesetzt werden.

## Patentansprüche

1. Anordnung zur Überwachung und Beeinflussung von rechnergesteuerten Anlagen, insbesondere von Produktionsanlagen mit mehreren als Terminals (AT1 bis (AT4) ausgebildeten Überwachungsstationen mit jeweils einer Eingabe- und Anzeigevorrichtung (10, 11) zwecks Bedienung und Visualisierung der zu überwachenden Vorgänge, die zwecks bidirektionalem Datentransfer über eine autonome Schnittstelle, bestehend aus einem Host-Block (CLH) im Zentralrechner (ZR) der Anlage und einem Schaltblock (CLR) im Terminal, mit dem Zentralrechner verbunden sind, welche einen Prozessor (FB 11, FB 12)umfaßt zwecks rechnertaktunabhängiger Steuerung (Priorisierung) der Datenübertragung zwischen den Terminals (AT 1 bis AT4) und dem Zentralrechner (ZR).

2. Anordnung nach Anspruch 1, **dadurch gekennzeichnet**, dass die Terminals (AT1 bis AT4) mittels Leitungsbus (20) in der Ausbildung als Triaxialkabel bis zu 50 m bzw. in der Ausbildung als Lichtwellenleiter bis zu 400 m vom Zentralrechner (ZR) entfernt angeordnet und sternförmig mit dem dem Zentralrechner (ZR) zugeordneten Host-Block (CLH) verbunden sind.

3. Anordnung nach den Ansprüchen 1 und 2, **dadurch gekennzeichnet**, dass der Schaltblock (CLR) eines jeden Terminals (AT1 bis AT4) und der Host-Block (CLH) Sende- und Empfangseinheiten (FB13 bis FB20) umfaßt zwecks Codierung und Decodierung der anfallenden Datenströme sowie deren Umwandlung in serielle hochfrequente Signale, wobei die Übertragung der Dateneingaben zwischen den Terminals (AT1 bis AT4) und dem Zentralrechner (ZR) mittels des in dem Host-Block (CLH) vorhandenen Prozessors (FB11/FB 12) prioritätsabhängig (first come-first serve) gesteuert ist.

4. Anordnung nach den Ansprüchen 1 bis 3, **dadurch gekennzeichnet**, dass für die Aktivierung eines Terminals (AT1 bis AT4) ein als anzuschlagende Taste, als Bedienung eines Touch-Eingabemediums oder als Handhabung einer Maus ausgebildeter Schlüsselschalter (14) vorgesehen ist und dass über ein Zeitglied im Host-Block (CLH) die Freigabe der für eine Datenübertragung gesperrten Terminals frühestens nach einem definierten Zeitintervall nach der letzten Dateneingabe am aktivierten Terminal durchführbar ist.

5. Anordnung nach den Ansprüchen 1 bis 4, **dadurch gekennzeichnet**, dass dem Schaltblock (CLR) eines jeden Terminals (AT1 bis AT4) und dem Host-Block (CLH) eine optische Anzeigevorrichtung (15) zwecks Anzeige des augenblicklichen Betriebsstatus zugeordnet ist.

6. Anordnung nach einem oder mehreren der vorhergehenden Ansprüche, **dadurch gekennzeichnet**, dass dem Host-Block (CLH) eine seriell anzeigende Vorrichtung (10) zugeordnet ist, welche den Status aller Terminals (AT1 bis AT4) und des Host-Blockes (CLH) anzeigt.

7. Anordnung nach einem oder mehreren der vorhergehenden Ansprüche, **dadurch gekennzeichnet**, dass dem Host-Block (CLH) ein lokales Terminal (LT) zugeordnet ist, das funktional identisch mit den abgesetzten Terminals (AT1 bis AT4) ausgebildet und ebenfalls in die Priorisierung eingebunden ist.

8. Anordnung nach einem oder mehreren der vorhergehenden Ansprüche, **dadurch gekennzeichnet**, dass die abgesetzten Terminals (AT1 bis AT4) über den Zentralrechner (ZR) in ihrer Priorität änderbar und/oder sperrbar ausgebildet sind.
